# EUROPÄISCHE PATENTSCHRIFT

(11) **EP 3 015 320 B1**
(45) Veröffentlichungstag und Bekanntmachung des Hinweises auf die Patenterteilung: **09.08.2017**
(21) Anmeldenummer: 14190959.8
(22) Anmeldetag: 29.10.2014
(51) Int. Cl.: B60R 21/00

(54) **Rückhaltebügel zur Sicherung einer Person in einem Sitz eines Vergnügungsgeräts**
Restraint bar for securing a person in a seat of an entertainment device
Étrier de retenue destiné à sécuriser une personne sur un siège d'un appareil de divertissement

(43) Veröffentlichungstag der Anmeldung: 04.05.2016
(73) Patentinhaber: ABC Engineering AG, 8877 Murg (CH)
(72) Erfinder: Mazzoleni, Viktor, 8863 Buttikon (CH)
(74) Vertreter: Meyer, Ludgerus

(56) Entgegenhaltungen:
- DE-C1- 10 016 213
- US-A1- 2009 179 469

## Beschreibung

Die Erfindung betrifft einen Rückhaltebügel zur Sicherung einer Person, insbesondere eines Kindes, in einem Sitz eines Vergnügungsgeräts oder einer Freizeitbahn nach dem Oberbegriff des Anspruchs 1.

Auf Jahrmärkten und in Freizeitparks kommen vielfach Freizeitanlagen, insbesondere Vergnügungsbahnen oder sich drehende Einrichtungen zum Einsatz, bei denen sich die Personen während der Fahrt in Sitzen befinden. Die Sitze müssen Sicherungseinrichtungen aufweisen, um die Personen während der Fahrt fest in den Sitzen zu sichern. Die heutzutage zum Einsatz kommenden Sicherheitssitze verwenden in der Regel Rückhaltebügel, die als Kippbügel über eine Lagerung am kopfseitigen Ende des Sitzes zwischen einer angehobenen Stellung, in der der Sitz besetzt oder verlassen werden kann, und einer abgesenkten Stellung, in der die Person im Hüftbereich durch einen Querbügel des Rückhaltebügels im Sitz fixiert wird, verschwenkbar ist. Um zu verhindern, dass Personen, insbesondere Kinder, ihre Unterschenkel während der Fahrt anheben oder auf der Sitzfläche anwinkeln, können diese Rückhaltebügel auch zusätzliche Fußstützbügel enthalten, die das Nach-Vorne/- Obenschwenken der Unterschenkel verhindern. Alternative Sicherungseinrichtungen bestehen aus Rückhaltebügeln, die fußseitig angelenkt sind und von vorne gegen die zu sichernde Person gekippt werden. Wenn der Rückhaltebügel nur als Bauchbügel erforderlich ist, kann dieser auch von der Seite vor die zu sichernde Person geschwenkt und dann verriegelt werden.

Obgleich derartige Rückhaltesysteme eine sichere Fixierung von Erwachsenen ermöglichen, besteht bei Kindern je nach ihrer Größe gleichwohl das Problem, dass sie sich aus dem Sicherungssystem lösen und während der Fahrt aus dem Sitz aussteigen können.

DE 100 16 213 C1 (D2) offenbart einen Rückhaltebügel gemäß dem Oberbegriff des Anspruchs 1.

Der Erfindung liegt die Aufgabe zugrunde, einen verbesserten Rückhaltebügel zur Sicherung einer Person, insbesondere eines Kindes, anzugeben, der das Aussteigen der Person aus dem Sitz bei fixiertem Rückhaltebügel weiter erschwert oder gänzlich verhindert.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einem Rückhaltebügel zur Sicherung einer Person, insbesondere eines Kindes, in einem Sitz eines Vergnügungsgeräts, bei dem der Rückhaltebügel als Kipp- oder Schwenkbügel über eine Lagerung in einer ersten Stellung, in der der Sitz besetzt oder verlassen werden kann, und einer zweiten Stellung, in der die Person im Hüftbereich durch einen Querbügel des Haltebügels oder eines Bauchbügels im Sitz fixiert wird, verschwenkbar ist.

Erfindungsgemäß weist der Quer- oder Bauchbügel wenigstens eine daran befestigte mehrteilige flexible Schürze auf, welche in abgesenkter Stellung des Rückhaltebügels auf den Oberschenkeln der Person aufliegen kann.

Die erfindungsgemäße Schürze verhindert, dass ein Kind seine Beine zurückziehen kann und nach hinten oben aus einem derart gesicherten Sitz aussteigen kann. Beim Zurückziehen der Beine würden die Füße gegen die Schürze stoßen und damit das weitere Zurückziehen der Beine verhindern.

Vorzugsweise ist die Schürze aus mehreren parallel verlaufenden Streifen gebildet, die nebeneinander an dem Querbügel befestigt sind. Damit wird verhindert, dass ein Kind durch einfaches Anheben des freien Endes der Schürze einen Freiraum schafft, um die Beine zurückziehen zu können. Wenn beispielsweise quer über die Beine mehr als zwei Streifen verteilt angeordnet sind, ist es einem Kind nicht möglich, alle Streifen gleichzeitig anzuheben.

Die Schürze bzw. Streifen sind an den Querbügeln vorzugsweise in Radialrichtung befestigt. Die Befestigung kann dadurch erfolgen, dass die befestigungsseitigen Enden der Schürze bzw. der Streifen in eine U-förmige Schiene eingesetzt sind, die an dem Kern oder der Oberfläche des walzenförmig ausgebildeten Querbügels befestigt ist. Vorzugsweise verläuft die Befestigungsschiene innerhalb einer flexiblen Ummantelung, z. B. aus Softgummi oder Moosgummi, des Querbügels. Damit wird verhindert, dass die Befestigung der Schürze oder der Streifen ein Verletzungsrisiko darstellt oder Bekleidung der zu sichernden Person beschädigen kann. Anstelle einer radialen Befestigung können die Streifen oder die Schürze auch in Schrägrichtung in einem Spalt des Querbügels aufgenommen sein oder auch an der Oberfläche des Querbügels befestigt sein.

Es ist auch möglich, die befestigungsseitigen Enden der Streifen oder der Schürze über ein Drehgelenk an der Oberfläche des Querbügels zu befestigen. Dies erleichtert den Aufbau des Querbügels, wobei die Gelenkbefestigung zur Vermeidung einer Druckbelastung einer Person vorzugsweise an der Oberseite des Querbügels angeordnet sein sollte. Die Streifen oder Schürze verlaufen damit etwa über eine halbe Umfangslänge des Querbügels.

Die Schürze oder die Streifen sind an ihren freien Enden vorzugsweise jeweils mit einer Gewichtsplatte oder Stabilisierungsplatte versehen, die einerseits die Streifen oder die Schürze fest auf die Oberschenkel der zu sichernden Person drücken, und andererseits die freien Enden der Schürze oder der Streifen versteifen. Diese Platten können an den Streifen oder der Schürze verschraubt sein. Die Platten können auch in das Material der Schürze oder der Streifen eingebettet sein, um Beschädigungen der Bekleidung der Person oder Verletzungen durch das Befestigungsmaterial zu vermeiden. Anstelle von speziellen Gewichtsplatten kann auch vorgesehen sein, die endseitigen freien Enden der Schürze oder der Streifen durch eine vergrößerte Dicke zu versteifen und/oder gewichtsmäßig zu verstärken.

Die Schürze oder die Streifen bestehen vorzugsweise aus gummiartigem Kunststoffmaterial, welches auch mit einer Gewebeverstärkung versehen sein kann. Hierzu eignet sich z. B. ein bei Förderbändern verwendetes armiertes Gurtmaterial. Die Schiene oder die Streifen können auch aus Metall, insbesondere Federstahl, bestehen.

Zur weiteren Erhöhung der Sicherheit gegen Herausschlüpfen einer Person, insbesondere eines Kindes, aus dem Sitz kann das freie Ende der Schürze oder der Streifen an der Stirnseite jeweils noch mit einem Verstärkungselement aus flexiblem Material versehen sein, das vorderseitig zackenartig profiliert ist, welches das Zurückziehen der Beine weiter erschwert.

Bei der Erfindung werden vorzugsweise 3 - 10 parallele Streifen verwendet. Alternativ können auch parallel zueinander verlaufende Bürstenreihen verwendet werden, bei denen sich die Borsten in einem flexiblen Halteband befinden und nach unten auf die Oberschenkel der zu sichernden Person gerichtet sind. Die Haltebänder sind in gleicher Weise wie die Streifen an dem Querbügel befestigt.

Die Erfindung wird nachstehend anhand eines Ausführungsbeispiels näher erläutert. Es zeigen:
- Fig. 1: eine schematische Seitenansicht eines Sitzes einer Ausführungsform eines Vergnügungsgeräts nach der Erfindung,
- Fig. 2: eine Aufsicht auf einen Querbügel mit angesetzten Streifen,
- Fig. 3 a-d: Befestigungsarten zur Befestigung von Streifen an dem Querbügel, und
- Fig. 4 a-c: Ausbildungen der freien Enden der Streifen.

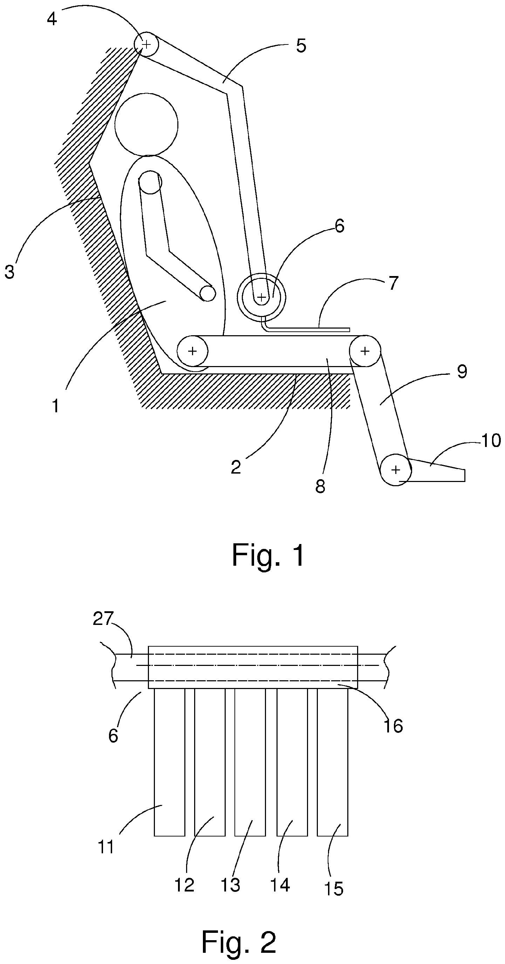

Die in Fig. 1 gezeigte Skizze zeigt eine Aufsichtsform eines Personensitzes in einem Vergnügungsgerät mit einer Sitzschale 2 und einer Rückenschale 3, an deren oberem Ende ein Gelenk 4 angeordnet ist, um einen Rückhaltebügel 5 schwenkbar zwischen einer ersten oberen angehobenen Stellung und einer zweiten unteren dargestellten Stellung verschwenken zu können. Der Rückhaltebügel besteht aus einem im Lager 4 gelagerten Rückhaltebügel 5 mit zwei parallelen Stangen, zwischen denen am unteren freien Ende ein Querbügel 6, der auch allein als Bauchbügel ausgebildet sein kann, fest oder schwenkbar befestigt ist. An der Unterseite des Querbügels 6 ist eine Schürze bzw. es sind mehrere eine Schürze bildende parallele Streifen 7 befestigt.

Die zu sichernde Person 1 ist auf dem Sitz derart gesichert, dass der Querbügel 6 in abgesenkter Stellung des Rückhaltebügels im Hüftbereich oberhalb der Oberschenkel verläuft und in dieser Stellung fixiert ist. Die Streifen 7 liegen in dieser Stellung auf den Oberschenkeln 8 der Person auf. Bei Kindern können die Streifen 7 auch noch über die Knie bis auf die Unterschenkel 9 und fast bis zu den Füßen 10 heranreichen.

Die Streifen 7 verhindern, dass die zu sichernde Person nach hinten und oben aus dem Sitz herausschlüpfen kann. Dabei werden sich die Streifen 7 beim Versuch des Herausschlüpfens zwischen den Oberschenkeln der Person und dem Querbügel 6 verklemmen und damit das weitere Zurückziehen der Oberschenkel verhindern. Dies gilt insbesondere auch dann, wenn der Querbügel 6 eine winkelmäßige Verschwenkung um z. B. 90° erlaubt.

Fig. 2 zeigt eine Aufsicht auf den Querbügel 6 mit daran befestigten Streifen 11 - 15. Diese sind parallel zueinander angeordnet, und weisen einen kleinen bis mittleren Abstand von 1-5 cm zueinander auf. Vorzugsweise sind über die Breite des Querbügels 6 5 - 10 einzelne Streifen verteilt angeordnet. Sie weisen eine Länge auf, die etwa der Länge der Oberschenkel einer zu sichernden Person entspricht oder auch, bei Kindern, länger sein kann. Die Länge und Anordnung der Streifen kann untereinander variieren, so dass ihre Form ergonomischen Vorgaben angepasst werden kann.

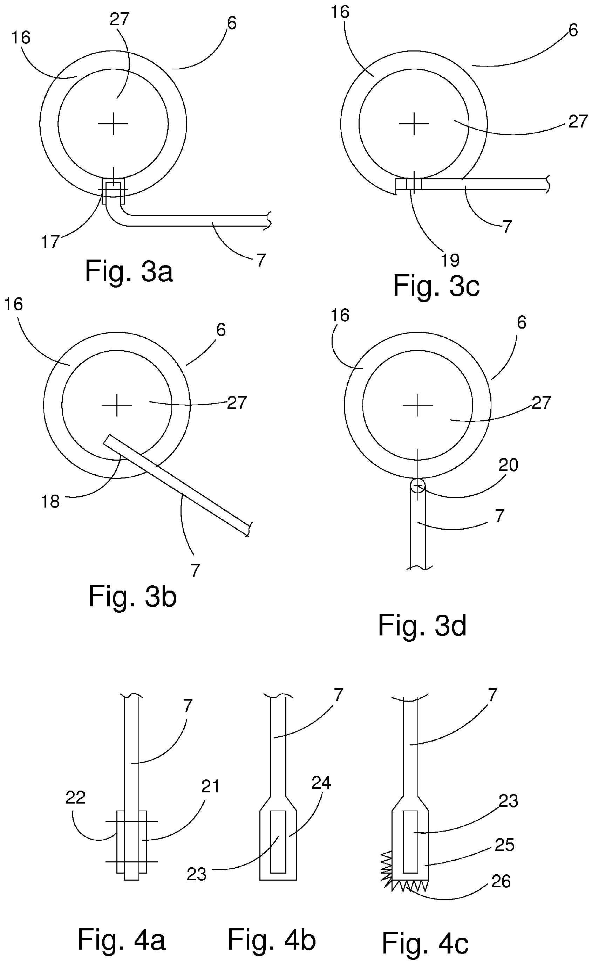

In den Figuren 3a - d sind verschiedene Befestigungsarten zur Befestigung der Streifen 7 an dem Querbügel 6 dargestellt. Fig. 3a zeigt eine Befestigung eines Streifens 7 in einer U-förmigen Schiene 17, die achsparallel am Kern 27 des Querbügels 6 befestigt ist, wobei die Befestigung mittels Schrauben erfolgt und die Schiene 17 am Kern 27 verschweißt ist. Der Querbügel 6 weist eine außenseitige Ummantelung 16 aus beispielsweise Soft- oder Moosgummi auf, die einerseits eine Polsterung darstellt und andererseits die Schiene 17 einschließt, so dass diese keine Verletzungen oder Schäden verursachen kann. Die Schenkel der Schiene 17 können aber auch etwas von der Oberfläche des Querbügels vorstehen.

Fig. 3b zeigt eine Befestigung der Streifen 7 in Schrägrichtung durch Einsetzen in einen entsprechenden Spalt 18 des Querbügels 6. Auch hier kann der Querbügel 6 durch eine Ummantelung 16 abgepolstert sein.

Fig. 3c zeigt eine Ausbildung, bei der der Streifen 7 tangential von dem Querbügel 6 absteht, wobei der Streifen durch eine Schraubverbindung 19 an der Oberfläche des Kerns 27 des Querbügels 6 befestigt ist. Die Ummantelung 16 ist an der Stelle der Befestigung 19 entsprechend ausgespart.

Fig. 3d zeigt eine Befestigung des Streifens 7 über ein Gelenk 20 an der Oberfläche des Querbügels 6. Beim Verschwenken der Streifen 7 bis in die Tangentiale zur Oberfläche des Querbügels 6 weist diese Ausführung die gleichen Eigenschaften wie die Ausführung von Fig. 3c auf.

Die Figuren 4a - c zeigen verschiedene Ausbildungen der freien Enden der Streifen 7. Zur Gewichtserhöhung oder Stabilisierung der freien Enden der Streifen 7 sind gemäß Fig. 4a Gewichtsplatten 21, 22 an die freien Enden der Streifen 7 angeschraubt.

Gemäß Fig. 4b ist alternativ eine entsprechende Gewichtsplatte 23 in das verstärkte Material 24 des Streifens 7 eingebettet, so dass die Verletzungs- oder Beschädigungsgefahr durch Befestigungsmaterial bei dieser Ausführung verringert ist.

Fig. 4c zeigt eine Ausbildungsform, bei der das freie stirnseitige und unterseitige Ende des Streifens 7 mit einer zackenförmigen Profilierung 26 versehen ist, die es zusätzlich verhindert, dass die zu sichernde Person sich aus dem Sitz herausbewegen kann. Das endseitige Material 24 des Streifens kann verstärkt, oder mit und ohne Gewichtsplatten 23 versehen sein. Bei ausreichender Stärke des Materials der Streifen 7 am stirnseitigen Ende kann auf eine Gewichtserhöhung durch eingelegte oder aufgesetzte Gewichtsplatten verzichtet werden.

Die zackenartige Profilierung kann entweder durch entsprechende Ausformung des freien Endes der Streifen gebildet sein oder als zusätzliches Teil an das freie Ende der Streifen angeschraubt sein. Die Profilierung kann sich auch auf die Stirnseite des Streifens oder die Unterseite beschränken.

Die Erfindung lässt sich nicht nur bei oberseitig angelenkten Rückhaltebügeln verwenden, sondern in gleicher Weise bei unterseitig angelenkten Rückhaltebügeln.

Ferner kann der Rückhaltebügel auch seitlich am Sitz befestigt sein und als Bauchbügel vor die Person geschwenkt werden.

### Bezugszeichen

- 1: Person
- 2: Sitzschale
- 3: Rückenschale
- 4: Gelenk
- 5: Rückhaltebügel
- 6: Querbügel
- 7: Streifen, Schürze
- 8: Oberschenkel
- 9: Unterschenkel
- 10: Füße
- 11-15: Streifen
- 16: Ummantelung
- 17: Schiene
- 18: Spalt
- 19: Schraubbefestigung
- 20: Gelenk
- 21, 22: Gewichtsplatten
- 23: Gewichtsplatte
- 24: Verstärkung
- 25: Verstärkung
- 26: Profilierung
- 27: Kern

## Patentansprüche

1. Rückhaltebügel zur Sicherung einer Person (1), insbesondere eines Kindes, in einem Sitz eines Vergnügungsgerätes, bei dem der Rückhaltebügel (5) über ein an dem Sitz befestigten Gelenk (4) zwischen einer ersten Stellung, in der der Sitz besetzt oder verlassen werden kann, und einer zweiten Stellung, in der die Person (1) im Hüftbereich durch einen Querbügel (6) des Rückhaltebügels im Sitz fixiert wird, verschwenkbar ist, **dadurch gekennzeichnet, dass** der Querbügel (6) wenigstens eine daran befestigte mehrteilige flexible Schürze (7) aufweist, welche in der zweiten Stellung des Rückhaltebügels (5) auf den Oberschenkeln (8) der Person (1) aufliegen kann.

2. Rückhaltebügel nach Anspruch 1, **dadurch gekennzeichnet, dass** die Schürze (7) aus einer Reihe parallel verlaufender voneinander getrennter Streifen gebildet ist, die nebeneinander an dem Querbügel (6) befestigt sind.

3. Rückhaltebügel nach Anspruch 2, **dadurch gekennzeichnet, dass** die Streifen (7) in Radial-, Schräg- oder Tangentialrichtung von der Oberfläche des Querbügels abstehend verlaufen, wobei die befestigungsseitigen Enden der Streifen an dem Querbügel (6) befestigt sind.

4. Rückhaltebügel nach Anspruch 2, **dadurch gekennzeichnet, dass** die befestigungsseitigen Enden der Streifen oder die Schürze an dem Querbügel gelenkig (20) befestigt sind.

5. Rückhaltebügel nach einem oder mehreren der vorhergehenden Ansprüche, **dadurch gekennzeichnet, dass** der Querbügel (6) walzenförmig mit einem festen Kern (27) und einer flexiblen Ummantelung (16) ausgebildet ist.

6. Rückhaltebügel nach Anspruch 5, **dadurch gekennzeichnet, dass** die Schürze oder die Streifen (7) in einer U-förmigen Schiene (17) aufgenommen sind, welche in Achsialrichtung am Kern des Querbügels (6) innerhalb der flexiblen Ummantelung (16) befestigt ist.

7. Rückhaltebügel nach Anspruch 1 oder 2, **dadurch gekennzeichnet, dass** die Schürze oder die Streifen (7) an ihren freien Enden mit einer Gewichts- oder Stabilisierungsplatte (21- 23) versehen ist oder sind.

8. Rückhaltebügel nach Anspruch 7, **dadurch gekennzeichnet, dass** die Gewichts- oder Stabilisierungsplatte (21 - 23) eine Länge von 1/3 bis 2/3 der Gesamtlänge der Schürze oder der Streifen (7) aufweist.

9. Rückhaltebügel nach Anspruch 7, **dadurch gekennzeichnet, dass** die Gewichts- oder Stabilisierungsplatte (23) in das Material der Schürze oder der Streifen (7) eingebettet ist.

10. Rückhaltbügel nach einem oder mehreren der vorhergehenden Ansprüche, **dadurch gekennzeichnet, dass** die Schürze oder die Streifen (7) aus Gummi oder gummiartigem Kunststoffmaterial besteht.

11. Rückhaltebügel nach Anspruch 1 oder 2, **dadurch gekennzeichnet, dass** die Schürze oder die Streifen am freien Ende ein vorder- und/oder unterseitig profiliertes Verstärkungselement (26) aus flexiblem Material aufweisen.

12. Rückhaltebügel nach Anspruch 1, **dadurch gekennzeichnet, dass** der Querbügel um seine Achse verschwenkbar ist.

## Claims

1. Restraint bar for securing a person (1), in particular a child, in a seat of an amusement device, in which the restraint bar (5) can be pivoted via a hinge (4), fastened to the seat, between a first position in which the seat can be occupied or vacated and a second position in which the person (1) is secured in the seat at the hips by a crossbar (6) of the restraint bar, **characterised in that** the crossbar (6) comprises at least one multipart flexible skirt (7) fastened thereto which can rest on the thighs (8) of the person (1) in the second position of the restraint bar (5).

2. Restraint bar according to claim 1, **characterised in that** the skirt (7) is formed of a row of separate strips which extend in parallel and are fastened side by side to the crossbar (6).

3. Restraint bar according to claim 2, **characterised in that** the strips (7) extend so as to protrude from the surface of the crossbar in the radial, oblique or tangential direction, the fastening-side ends of the strips being fastened to the crossbar (6).

4. Restraint bar according to claim 2, **characterised in that** the fastening-side ends of the strips or the skirt are or is fastened to the crossbar in an articulated manner (20).

5. Restraint bar according to one or more of the preceding claims, **characterised in that** the crossbar (6) is cylindrical and has a solid core (27) and a flexible sheathing (16).

6. Restraint bar according to claim 5, **characterised in that** the skirt or the strips (7) are received in a U-shaped rail (17), which is fastened in the axial direction to the core of the crossbar (6) inside the flexible sheathing (16).

7. Restraint bar according to either claim 1 or claim 2, **characterised in that** the skirt or the strips (7), at the free ends thereof, is or are provided with a weight plate or stabilising plate (21-23).

8. Restraint bar according to claim 7, **characterised in that** the weight plate or stabilising plate (21-23) has a length of from 1/3 to 2/3 the total length of the skirt or of the strips (7).

9. Restraint bar according to claim 7, **characterised in that** the weight plate or stabilising plate (23) is embedded into the material of the skirt or of the strips (7).

10. Restraint bar according to one or more of the preceding claims, **characterised in that** the skirt or the strips (7) consist of rubber or rubber-like plastics material.

11. Restraint bar according to either claim 1 or claim 2, **characterised in that** the skirt or the strips, at the free end, comprises or comprise a reinforcing element (26) that is made of a flexible material and is profiled at the front and/or at the bottom.

12. Restraint bar according to claim 1, **characterised in that** the crossbar can be pivoted about its axis.

## Revendications

1. Etrier de retenue destiné à sécuriser une personne (1), en particulier un enfant, dans un siège d'un appareil de divertissement, l'étrier de retenue (5) étant apte à pivoter, par l'intermédiaire d'une articulation (4) fixée au siège, entre une première position dans laquelle on peut s'installer sur le siège ou quitter celui-ci, et une seconde position dans laquelle la personne (1) est immobilisée dans le siège, dans la zone des hanches, par une traverse (6) de l'étrier de retenue, **caractérisé en ce que** la traverse (6) comporte, fixée sur elle, au moins une jupe flexible (7) en plusieurs parties qui peut être posée, dans la seconde position de l'étrier de retenue (5), sur les cuisses (8) de la personne (1).

2. Etrier de retenue selon la revendication 1, **caractérisé en ce que** la jupe (7) se compose d'une rangée de bandes parallèles, séparées les unes des autres, qui sont fixées côte à côte à la traverse (6).

3. Etrier de retenue selon la revendication 2, **caractérisé en ce que** les bandes (7) s'étendent à partir de la surface de la traverse radialement, en biais ou tangentiellement, leur extrémité située côté fixation étant fixée à la traverse (6).

4. Etrier de retenue selon la revendication 2, **caractérisé en ce que** les extrémités, situées côté fixation, des bandes ou la jupe sont fixées à la traverse de manière articulée (20).

5. Etrier de retenue selon l'une au moins des revendications précédentes, **caractérisé en ce que** la traverse (6) a la forme d'un rouleau avec un noyau fixe (27) et une gaine flexible (16).

6. Etrier de retenue selon la revendication 5, **caractérisé en ce que** la jupe ou les bandes (7) sont logées dans un rail en U (17) qui est fixé dans le sens axial au noyau de la traverse (6) à l'intérieur de la gaine flexible (16).

7. Etrier de retenue selon la revendication 1 ou 2, **caractérisé en ce que** la jupe ou les bandes (7) est ou sont pourvues à leur extrémité libre d'une plaque formant poids ou d'une plaque de stabilisation (21 - 23).

8. Etrier de retenue selon la revendication 7, **caractérisé en ce que** la plaque formant poids ou la plaque de stabilisation (21 - 23) présente une longueur qui représente 1/3 à 2/3 de la longueur totale de la jupe ou des bandes (7).

9. Etrier de retenue selon la revendication 7, **caractérisé en ce que** la plaque formant poids ou la plaque de stabilisation (21 - 23) est noyée dans la matière de la jupe ou des bandes (7).

10. Etrier de retenue selon l'une des revendications précédentes, **caractérisé en ce que** la jupe ou les bandes (7) sont en caoutchouc ou en matière plastique du type caoutchouc.

11. Etrier de retenue selon la revendication 1 ou 2, **caractérisé en ce que** la jupe ou les bandes présentent à leur extrémité libre un élément de renforcement (26) en matière flexible qui est profilé sur son côté avant et/ou inférieur.

12. Etrier de retenue selon la revendication 1, **caractérisé en ce que** la traverse est apte à pivoter sur son axe.
